# EUROPÄISCHE PATENTSCHRIFT

(11) **EP 2 710 358 B1**
(45) Veröffentlichungstag und Bekanntmachung des Hinweises auf die Patenterteilung: **01.07.2020**
(21) Anmeldenummer: 12743652.5
(22) Anmeldetag: 16.05.2012
(51) Int. Cl.: G01N 25/14, G01N 21/71, G01N 1/22

(54) **VORRICHTUNG ZUR PRÜFUNG EINES FASERVERBUNDBAUTEILS AUF KONTAMINATIONEN**
DEVICE FOR INSPECTING A FIBRE-COMPOSITE COMPONENT FOR CONTAMINATIONS
DISPOSITIF PERMETTANT DE VÉRIFIER LA PRÉSENCE DE MATIÈRES CONTAMINANTES SUR UNE PIÈCE EN COMPOSITE RENFORCÉ PAR DES FIBRES

(30) Priorität: 19.05.2011 DE 102011102055
(43) Veröffentlichungstag der Anmeldung: 26.03.2014
(73) Patentinhaber: Airbus Defence and Space GmbH, 85521 Ottobrunn (DE)
(72) Erfinder: BEER, Sebastian, 93047 Regensburg (DE); HELLWIG, Andreas, 80469 München (DE); MÜLLER, Gerhard, 85567 Grafing (DE); LUINGE, Hans, 7559 DW Hengelo (NL); WACHINGER, Georg, 83026 Rosenheim (DE)
(74) Vertreter: Schicker, Silvia
(86) Internationale Anmeldenummer: PCT/DE2012/000504
(87) Internationale Veröffentlichungsnummer: WO 2012/155888

(56) Entgegenhaltungen:
- US-A- 5 425 263
- US-A- 5 528 032
- US-A1- 2004 219 067
- US-A1- 2007 252 084
- US-A1- 2010 072 359
- US-B1- 6 978 657

## Beschreibung

Die Erfindung betrifft eine Vorrichtung zur Prüfung eines mittels Verklebung zu bearbeitenden Faserverbundbauteils auf das Vorhandensein mindestens eines Stoffes aus einer Auswahl möglicher Kontaminationsstoffe sowie ein Verfahren zu deren Betrieb.

Die Reparatur von Strukturbauteilen aus faserverstärkten Kunststoffen (FVK) mittels Klebverbindungen ist wegen des möglichen Vorhandenseins von Kontaminationen im Kunststoff, welche die Haftfestigkeit der Klebeverbindung erheblich beeinträchtigen können, problematisch. Sofern ein FVK-Bauteil im Betrieb Umgebungsbedingungen mit flüssigen oder gasförmigen Substanzen ausgesetzt ist, die in den Kunststoff eindiffundieren können, kann dadurch die Klebestelle massiv beeinträchtigt werden mit der möglichen Folge eines Totalversagens der Klebeverbindung. Aus diesem Grund ist die Klebereparatur von FVK-Bauteilen in der zivilen Luftfahrt bisher verboten.

Es ist möglich, mittels Sensoren wie Metalloxidsensoren (MOX-Sensoren), nichtdispersiven Infrarotsensoren (NDIR-Sensoren) und/oder Feuchtesensoren die in Betracht kommenden Kontaminationsstoffe zu detektieren oder sogar zu messen. Dies ist nur ein ganz erheblicher Aufwand, weil jeder Kontaminationsstoff eigene Sensoren bzw. Sensoreinstellungen erfordert und daher die Prüfung auf die Präsenz mehrerer möglicher Kontaminationsstoffe sowohl baulich als auch verfahrenstechnisch sehr aufwendig ist.

US 2004/0219067 A1 offenbart eine Vorrichtung zum Erfassen von festen oder flüssigen Kontaminationsstoffen, die auf einer Oberfläche eines Substrats angeordnet sind. Bei dieser vorbekannten Vorrichtung ist eine Heizquelle vorgesehen, die in einer Heizkammer angeordnet ist, durch welche das Substrat transportiert wird. Durch die Hitze der Heizquelle werden auf der Substratoberfläche befindliche Kontaminationen desorbiert und über eine Leitung zur Analyse einer Analyseeinheit zugeführt.

US 5,425,263 A und US 6,978,657 B1 betreffen eine Vorrichtung zum Inspizieren von Partikeln und Dämpfen, die von einem zu untersuchenden Objekt abgesondert werden. Hierzu umfasst die Vorrichtung eine Absaugvorrichtung, bei der über eine Leitung die zu untersuchenden Partikel und Dämpfe zu einem Sensor in der Vorrichtung geleitet werden.

US 2007/0252084 A1 offenbart ein mobiles Prüfsystem zum Untersuchen und Erfassen von Verunreinigungen an Oberflächen eines zu verklebenden Verbundbauteils. Hierzu umfasst das Prüfsystem Mittel zum Erwärmen einer zu untersuchenden Oberfläche, wodurch Verunreinigungen gelöst und daraufhin in ein Spektrometer geleitet werden.

US 2010/0072359 A1 betrifft eine mobile Vorrichtung zum Freisetzen und Detektieren von zumindest einem Analyt von einer zu untersuchenden Oberfläche. Die Vorrichtung umfasst eine Strahlungseinheit zum Erwärmen der Oberfläche und eine Ansaugvorrichtung, die dazu eingerichtet ist, die durch Erwärmen freigesetzte Dämpfe über eine Leitung zu einem Sensor zu leiten.

US 5,528,032 A betrifft eine Vorrichtung zum Detektieren von Desorptionsgas mit einer Vakuumkammer zum Aufnehmen eines zu untersuchenden Bauteils und einer Heizstrahlungseinrichtung zum Erwärmen des Bauteils. In der Vakuumkammer ist ferner ein Massenspektrometer angeordnet, das durch Erwärmung von dem Bauteil freigesetztes Desorptionsgas detektiert.

Hiervon ausgehend liegt der Erfindung die Aufgabe zugrunde, eine baulich einfache, leicht und fehlerresistent anwendbare Vorrichtung bereitzustellen, mittels der ein FVK- Bauteil auf das Vorhandensein einer Mehrzahl bestimmter Kontaminationsstoffe geprüft werden kann. Diese Aufgabe wird durch die Merkmale des Anspruchs 1 gelöst.

Eine Vorrichtung zur Prüfung eines mittels Verklebung zu bearbeitenden Faserverbundbauteils auf das Vorhandensein mindestens eines Stoffes aus einer Auswahl möglicher Kontaminationsstoffe, wobei diese in einer mobilen, integralen Einheit umfasst: eine Oberflächenerwärmungsvorrichtung zur regionalen Erwärmung eines zu verklebenden Teilbereichs des Faserverbundbauteils zwecks Desorption von Kontaminationsstoffen; ein Sensorarray mit mehreren Sensoren zur Erfassung aller Kontaminationsstoffe in der Gasphase; eine Kontrolleinrichtung zur Regelung der Oberflächenerwärmungsvorrichtung sowie zur Ansteuerung und zur Auslesung des Sensorarrays sowie zur Feststellung und Signalisierung ermittelter Kontaminationen.

Die erfindungsgemäße Ausbildung ermöglicht durch die unmittelbare Erwärmung eines Bereichs der zu behandelnden Oberfläche entweder mittels Wärmeleitung oder Wärmestrahlung eine thermische Desorption von Kontaminationsstoffen, bei dem feste oder flüssige Phasen unmittelbar in die Gasphase verwandelt wird. Dazu ist es nötig, dass der Erwärmungsvorgang des Bauteils temperaturüberwacht wird, damit keine unzulässig hohen Temperaturen auftreten welche das Bauteil beschädigen könnten. Das Sensorarray besitzt eine ausreichend große Anzahl von Sensoren, um alle zu erfassenden Kontaminationsstoffe simultan erfassen zu können, wodurch der Prüfvorgang kurz gehalten werden kann. Sofern ein oder mehrere Kontaminationsstoffe festgestellt werden, wird an den Benutzer ein entsprechendes Signal optisch und/oder akustisch ausgegeben. Es kann eine binäre Prüfung der Kontaminationsstoffe (in kritischer Konzentration vorhanden, nicht vorhanden) oder eine genauere Messung der erfassten Konzentration vorgesehen werden, was allerdings den notwendigen apparativen Aufbau erhöht. Ein Vorteil dabei ist, dass ohne ein Transportoder Trägergas gearbeitet wird, und so die Gaskonzentration unverdünnt bleibt, wodurch die Sensitivität und die Sensorgeschwindigkeit erhöht werden. Ferner können die Wände zur Sammlung der Kontaminationen leicht zugänglich gehalten und damit eine Reinigung und die Durchführung eines Sensor Neustarts erleichtert werden.

Die Oberflächenerwärmungsvorrichtung ist als Kontakterwärmungsvorrichtung ausgebildet. Es ist ein Heizstempel vorgesehen, der innenseitig erwärmt wird und eine ausreichende thermische Masse bzw. Wärmekapazität aufweist, um möglichst geringe Temperaturschwankungen beim Erwärmungsvorgang des Strukturbauteils zu bewirken. Diese Ausbildung hat jedoch den Nachteil, dass eine Erwärmung bzw. Messung nur entsprechend zugänglicher und ebener Flächen des FVK-Strukturbauteils möglich ist.

Die Vorrichtung umfasst einen Heizstempel, der zentral angeordnet ist und der von dem Sensorarray umgeben ist, das wiederum von einem Außengehäuse umschlossen ist. Dadurch wird eine sehr kompakte Ausbildung mit guter Erfassung der desorbierten Stoffe möglich.

Gemäß einer alternativen Ausführungsform umfasst die Vorrichtung einen zentralen Heizstempel, der von einer ringförmigen Streulichtkammer mit reflektierenden Wänden umgeben ist, ferner mindestens ein IR-Lichtemitter vorgesehen ist, der in die Streulichtkammer strahlt und mehrere in der Wandung der Streulichtkammer angeordnete selektive Fotodetektoren angeordnet sind. Es können auch beide Konstruktionen kombiniert werden, also in der Streulichtkammer zusätzlich zu den NDIR-Sensoren weitere MOX- Sensoren angeordnet sein.

Gemäß einem Beispiel, das für das Verständnis der Erfindung hilfreich ist, ist die Oberflächenerwärmungsvorrichtung als Heizstrahlungseinrichtung ausgebildet. Besonders bevorzugt ist ein Halogenstrahler, der durch Linsen und Spiegel zur gezielten Bestrahlung fast beliebig geformter Oberflächenbereiche verwendbar ist. Dabei wird vorzugsweise mittels eines Strahlungsthermometers die Temperatur der bestrahlten Oberfläche unmittelbar gemessen, wobei durch geeignete Regeleinrichtungen die Strahlungswärmeerzeugung in Abhängigkeit von der erfassten Temperatur einstellbar sein kann.

Ein Beispiel, das für das Verständnis der Erfindung hilfreich ist, sieht vor, dass die Heizstrahlungseinrichtung zentrisch angeordnet ist und rings um den Strahlungsbereich das Sensorarray angeordnet ist. Ferner kann in der erfindungsgemäßen Vorrichtung ein mit der Kontrolleinrichtung gekoppeltes optisches Thermometer vorgesehen sein zur Messung der Temperatur des bestrahlten Teilbereichs. Diese baulich kompakte Anordnung stellt sicher, dass die desorbierten Stoffe im Detektionsbereich verbleiben und zuverlässig erfasst werden können.

Ein Beispiel, das für das Verständnis der Erfindung hilfreich ist, sieht vor, dass die Oberflächenerwärmungsvorrichtung und das Sensorarray auf unterschiedlichen Seiten des Faserverbundbauteils anordenbar sind. Diese Ausführung hat den Vorteil, dass Kontaminationsstoffe von der Wärme "herausgedrückt" werden, d.h. in der Matrix in einem wesentlichen Teil gegen den Temperaturgradienten diffundieren.

Gemäß eines Beispiels, das für das Verständnis der Erfindung hilfreich ist, wird eine Vorrichtung zur Prüfung eines mittels Verklebung zu bearbeitenden Faserverbundbauteils auf das Vorhandensein mindestens eines Stoffes aus einer Auswahl möglicher Kontaminationsstoffe offenbart, mit einer Absaugvorrichtung zur Absaugung von Bearbeitungsstaub des Faserverbundbauteils; einer Filtervorrichtung zur Sammlung der Bearbeitungsstaubpartikel, einer Desorptionsvorrichtung zur thermischen Desorption von Kontaminationsstoffen aus den Bearbeitungsstaubpartikeln; einem Sensorarray mit mehreren Sensoren zur Erfassung aller Kontaminationsstoffe in der Gasphase; einer Kontrolleinrichtung zur Regelung der Desorptionsvorrichtung sowie zur Ansteuerung und zur Auslesung des Sensorarrays sowie zur Feststellung und Signalisierung ermittelter Kontaminationen.

Bei dieser Ausbildung erfolgt keine Erwärmung des Strukturbauteils selber, so dass eine thermische Beschädigung desselben ausgeschlossen werden kann. Vielmehr wird der vor einer Klebeverbindung erforderliche Fräsoder Schleifprozess ausgenutzt um das abgetragene Material zu analysieren. Diese Ausbildung hat den Vorteil, dass durch die massiv vergrößerte Oberfläche eine wesentlich größere Menge der Kontaminationen desorbiert werden kann, wodurch eine wesentlich genauere Erfassung der Kontaminationsstoffe möglich ist. Ferner müssen auch keine thermischen Grenzwerte des Strukturbauteils eingehalten werden, es muss nur sichergestellt werden, dass keine thermischen Zersetzungsvorgänge des Kunststoffes eintreten, welche das Messergebnis verfälschen können. Nachteil bei dieser Ausführung ist der größere apparative Aufwand, weil der Bearbeitungsstaub abgesaugt, gesammelt und dann einer Desorptionsvorrichtung zugeführt werden muss.

Gemäß einer vorteilhaften Weiterbildung der Erfindung umfasst das Sensorarray eine Anzahl von Metalloxid-Gasdetektoren (MOX), die jeweils für einzelne Kontaminationsstoffe sensitiv sind. Diese Sensoren sind baulich einfach und lassen sich an unterschiedliche zu detektierende Substanzen anpassen.

Gemäß einer vorteilhaften Weiterbildung der Erfindung umfasst das Sensorarray mindestens einen Feuchtigkeitssensor. Da der Feuchtigkeitsgehalt eines FVK- Bauteils genauso die Haftung einer Klebung beeinflusst, ist ein hoher Feuchtigkeitsgehalt genauso schädlich wie Kontaminationen durch spezielle Substanzen.

Gemäß einer vorteilhaften Weiterbildung der Erfindung umfasst das Sensorarray mindestens einen nicht-dispersiven Infrarotsensor (NDIR). Vorzugsweise sind mehrere für bestimmte Frequenzbereiche selektive Infrarotsensoren vorgesehen, deren Selektivitäten an die zu erfassenden Stoffe angepasst sind.

Gemäß einer vorteilhaften Weiterbildung sind die einzelnen Sensoren des Sensorarrays selektiv für einen oder mehrere der folgenden Kontaminationsstoffe (übliche englische Bezeichnungen oder Handelsnamen aus dem Bereich der Luftfahrtindustrie in Klammern): Tenside (LFZ surface cleaner)
synthetische Ester (Jet oil 2)
Alkohole, Glykole und Gemische davon (Runway deicer)
Alkohole (Developer U89)
Benzine, Kerosine
Butylphosphate, Phenylphosphate, Phosphatester (Hydraulic fluids, z.B. Skydrol)
Mineralöle (Turbine oil 500)
Kaliumacetate, Natriumformiate (Clariant safeway)
Phosphate, Silikate (Wet cleaner Surtec 121)
Wasser, Feuchtigkeit
Butanone, Methyl-Ethyl-Keton (MEK solvent)
Kohlenwasserstoffe, Silikone, Fluorkohlenwasserstoffe (release agent)
Synthetische Öle und Schmierstoffe.

Gemäß einer vorteilhaften Weiterbildung der Erfindung ist das Verbundbauteil Bestandteil eines Luftfahrzeugs. Unter Verwendung der erfindungsgemäßen Vorrichtung lassen sich so Verbundbauteile in Luftfahrzeugen auf das Vorhandensein von Kontaminationen überprüfen und gegebenenfalls durch Klebung reparieren, was bisher nicht zulässig ist.

Ein für das Verständnis der Erfindung hilfreiches Beispiel eines Verfahrens zur Prüfung eines mittels Verklebung zu bearbeitenden Faserverbundbauteils auf das Vorhandensein mindestens eines Stoffes aus einer Auswahl möglicher Kontaminationsstoffe sieht vor, dass zunächst mittels der beispielhaften Vorrichtung eine Analyse des Bearbeitungsstaubes durchgeführt wird und in Abhängigkeit des Resultates mittels der Vorrichtung gemäß Anspruch 1 mehr oder weniger genau durchgeführt wird. So kann vorzugsweise beim Schleifvorgang zur Vorbereitung der Klebefläche der Bearbeitungsstaub aufgefangen werden und dann analysiert werden. Sofern sich keine Kontaminationen ergeben, kann eine nachfolgende Oberflächenanalyse entweder ganz entfallen oder vereinfacht durchgeführt werden. Werden hingegen Kontaminationen festgestellt, wird mittels der Vorrichtung gemäß Anspruch 1 eine genaue Analyse der Stoffe durchgeführt.

Die Erfindung wird nachfolgend anhand bevorzugter Ausführungsbeispiele unter Bezugnahme auf die beigefügten Zeichnungen weiter erläutert. Dabei zeigt:
Figur 1 : ein Diagramm mit einer Hauptkomponentenanalyse zu drei Kontaminationen;
Figur 2: eine erste bevorzugte Ausführungsform einer Prüfvorrichtung;
Figur 3: eine zweite bevorzugte Ausführungsform einer Prüfvorrichtung;
Figur 4: eine dritte bevorzugte Ausführungsform einer Prüfvorrichtung;
Figur 5: eine Detektionsvorrichtung gemäß eines für das Verständnis der Erfindung hilfreichen Beispiels, das keine Ausführungsform der Erfindung darstellt;
Figur 6: eine Desorptionsvorrichtung für das in der Figur 5 dargestellte

### Beispiel.

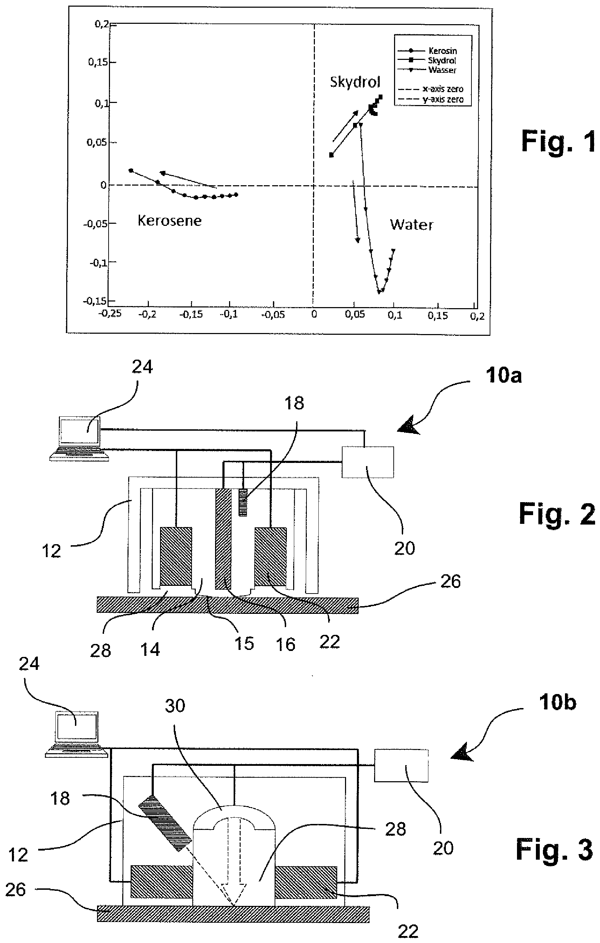

In Figur 1 ist das Diagramm einer Hauptkomponentenanalyse (PCA) für drei in der Luftfahrtindustrie häufig vorkommende Kontaminationen in Verbundbauteilen, nämlich, Kerosin, Skydrol und Wasser, unter Verwendung der erfindungsgemäß vorgeschlagenen Vorrichtung dargestellt. Die drei Stoffe konnten unter Verwendung von zwei Hauptkomponenten zuverlässig unterschieden werden. Kerosin lässt sich von Skydrol und Wasser unter Verwendung von Hauptkomponente 1 (X-Achse) und Skydrol lässt sich von Wasser durch die Hauptkomponente 2 (Y-Achse) unterscheiden.

**Figur 2** zeigt eine erste bevorzugte Ausführungsform einer Prüfvorrichtung 10a im schematischen Querschnitt, die im wesentlichen aus einem thermisch isolierenden Außengehäuse 12 besteht, in dem zentrisch ein vorzugsweise metallischer Heizstempel 14 angeordnet ist, der eine Heizfläche 15 aufweist und innenseitig über einen Heizstab 16 beheizbar ist. Die Heizfläche 15 ist so geformt, dass diese auf ein zu untersuchendes Verbundbauteil geeignet aufliegen kann. In Figur 2 ist die Heizfläche 15 konvex geformt, es ist aber auch eine plane Fläche oder im Einzelfall auch eine konkave Form denkbar. Es ist auch möglich, die Heizfläche 15 mit einer Wärme leitenden elastischen Beschichtung zu versehen, um einen optimalen Wärmeübergang ins Innere des Verbundbauteils zu gewährleisten.

Im Inneren des Heizstempels 14 ist ferner ein Thermometer 18 angeordnet, das gemeinsam mit dem Heizstab 16 an einen Thermostaten 20 angeschlossen ist. Der Heizstempel 14 ist von einem ringförmigen Sensorenarray 22 umgeben, das mit einer Kontrolleinrichtung 24 gekoppelt ist. Der Thermostat 20 ist ebenfalls mit der Kontrolleinrichtung 24 gekoppelt.

Das Sensorenarray 22 umfasst eine Anzahl nicht näher dargestellter MOX- und/oder NDIR-Sensoren und vorzugsweise zusätzlich einen Feuchtesensor. Die einzelnen Sensoren des Sensorenarrays 22 sind so konfiguriert, dass diese in der Lage sind, eine vorgegebene Auswahl an Kontaminationsstoffen zu detektieren.

Im Betrieb wird die Prüfvorrichtung 10a auf die Oberfläche eines zu untersuchenden Verbundbauteils 26 so platziert, dass die Heizfläche 15 auf der zu untersuchenden Stelle aufliegt. Mittels des über den Thermostaten 20 gesteuerten Heizstabes 16 wird die Heizfläche 15 und damit auch der damit in Berührung stehende Bereich des Verbundbauteils 26 auf eine Temperatur von ca. 160 - 220°C erwärmt (die genaue Temperatur hängt vom Material des Verbundbauteils 26 ab und wird so gewählt, dass das Material nicht geschädigt wird aber eine möglichst umfangreiche Diffusion und damit bessere Erfassung von möglichen Kontaminationsstoffen erzielt wird. Aus dem über die Heizfläche 15 erwärmten Verbundbauteil 26 treten - so vorhanden - die Kontaminationsstoffe aus und sammeln sich im Sammelraum 28 beiderseits der Auflagefläche der Heizfläche 15. Genau oberhalb dieses ringförmigen Sammelraumes 28 ist das Sensorenarray 22 angeordnet, das somit in die Lage versetzt wird, diese Kontaminationsstoffe zu erfassen. Zu diesem Zweck liegt das Sensorenarray 22 auch gegenüber der Heizfläche 15 etwas rückversetzt, um die Ausbildung des Sammelraumes 28 zur Sammlung der aus dem Verbundwerkstoff austretenden Stoffe zu ermöglichen. Die Signale des Sensorenarrays 22 werden der Kontrolleinrichtung 24 zugeführt, in der insbesondere mittels einer Hauptkomponentenanalyse (siehe Figur 1) das Vorhandensein bzw. in einer komplexeren Ausführungsform auch die Konzentration von Kontaminationsstoffen bestimmt und entsprechende optische und/oder akustische Signale an den Benutzer ausgegeben werden.

**Figur 3** zeigt eine zweite bevorzugte Ausführungsform einer Prüfvorrichtung 10b im schematischen Querschnitt. Dabei werden gleiche Bauteile wie in Figur 1 mit den gleichen Bezugszeichen versehen. Diese Prüfvorrichtung 10b verwendet eine Halogenlampe 30 zur Erzeugung der Wärme, um das Verbundbauteil 26 zu erwärmen. Das Thermometer 18 ist bei dieser Ausführungsform ein Strahlungsthermometer, der unmittelbar die Temperatur der beheizten Oberfläche messen kann, wodurch eine genauere Temperaturüberwachung und damit eine höhere Temperatur möglich ist, was die Menge der austretenden Stoffe erhöht und damit eine niedrigere Detektionsschwelle ermöglicht.

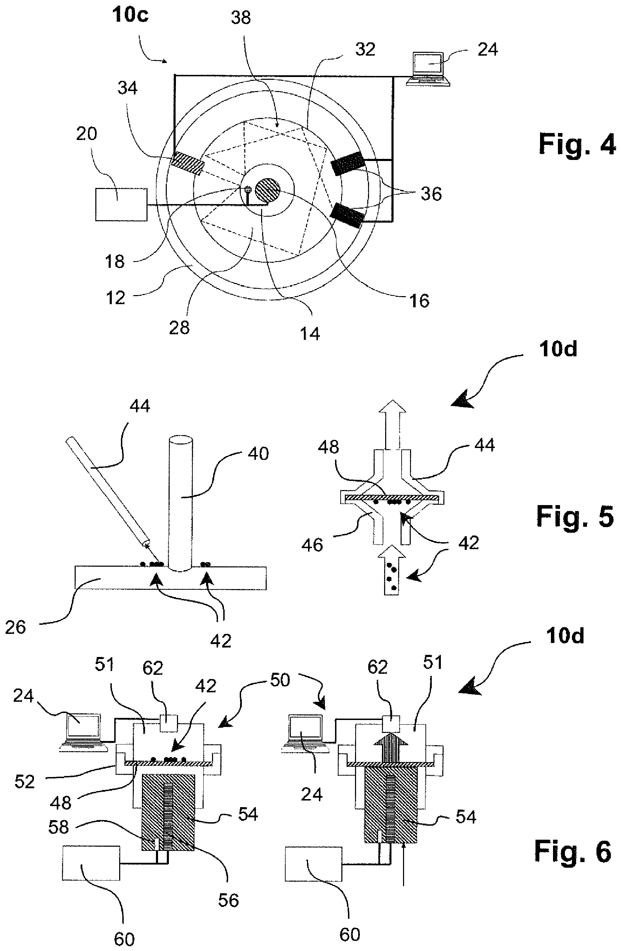

**Figur 4** zeigt eine dritte bevorzugte Ausführungsform einer Prüfvorrichtung 10c im schematischen Horizontalschnitt. Diese ähnelt der von Figur 2 und umfasst ebenfalls einen Heizstempel 14, der innenseitig mittels eines Heizstabes 16 erwärmt wird und mittels Thermometer 18 und Thermostat 20 temperaturgeregelt wird. Radial außerhalb des Heizstempels 14 ist eine ringförmige Streulichtkammer 28 vorhanden, deren innseitige und außenseitige Wandungen reflektierend ausgebildet sind. In der Außenwand 32 der Streulichtkammer 28 ist mindestens ein IR-Strahlungsemitter 34 sowie sind eine Anzahl (aus Gründen der Übersichtlichkeit sind nur zwei dargestellt) Photodetektoren 36 angeordnet.

Im Betrieb erwärmt der Heizstempel 14 - analog der Ausführung gemäß Figur 2 - das in Figur 4 nicht gezeigte Verbundbauteil, so dass etwa vorhandene Kontaminationsstoffe in den Sammelraum 28 austreten. Die Streulichtkammer 28 wird von IR-Strahlung 38 durchsetzt, der vom IR-Strahlungsemitter 34 ausgestrahlt wird und aufgrund der Reflektivität der Innen- und Außenwand 32 (sowie der Reflektivität der nicht gezeigten oberen Wand) unter mehrfacher Spiegelung die Photodetektoren 36 erreicht. Sofern in der Streulichtkammer 28 Kontaminationssubstanzen (und auch andere Substanzen) vorhanden sind, werden gewisse Spektren der Strahlung absorbiert, was von den mittels Filtern auf bestimmte Frequenzen oder Frequenzbereiche selektierten Photodetektoren 36 festgestellt wird. In der Praxis wird anstelle der zwei gezeigten eine Vielzahl (insbesondere 6 bis 20) von Detektoren 36 vorgesehen sein, damit die einzelnen Substanzen nicht nur erfasst sondern auch gegen einander selektiert werden können, wie dies in Figur 1 beispielhaft dargestellt ist. Vorzugsweise wird ein ungefilterter Referenzdetektor vorgesehen sein.

Die Figuren 5 und 6 zeigen ein für das Verständnis der Erfindung hilfreiches Beispiel einer Prüfvorrichtung 10d die sich von den vorherigen Ausführungen dadurch unterscheidet, dass die Sammlung der kontaminierten Partikel und die Desorption der Kontaminationsstoffe voneinander getrennt sind. In Figur 5 ist ein Verbundbauteil 26 darstellt, das mittels eines abrasiven Werkzeugs 40 (z.B. eine Schleifoder Fräsvorrichtung) bearbeitet wird. Dabei fällt Bearbeitungsstaub 42 an, der mittels einer Absaugvorrichtung 44 abgesaugt wird. In der Absaugvorrichtung ist ein zweiteiliges Filtergehäuse 46 mit einer einfach entnehmbaren Filtermembran 48 anordenbar, auf der die Bearbeitungsstaubpartikel 42 gesammelt werden. Hinter dem Filtergehäuse 46 liegt eine nicht gezeigte Ansaugpumpe.

In Figur 6 ist eine Desorptionsund Detektionseinheit 50 als Bestandteil der Prüfvorrichtung 10d, die eine durch ein zweiteiliges Gehäuse 52 definierte Analysekammer 51 umfasst, in dem eine mit Staub beladene Filtermembran 48 platzierbar ist. Die Detektionseinheit 50 umfasst ferner einen bewegbaren Heizstempel 54, der mit einem Heizstab 56 sowie einem Thermometer 58 zwecks Temperaturregelung an einem Thermostaten 60 angeschlossen ist, um eine konstante Temperatur des Heizstempels 54 sicherzustellen. Die Detektionseinheit 50 umfasst ein Sensorarray 62 mit mehreren Gasdetektoren, die vorzugsweise als MOX- und/oder NDIR-Sensoren und/oder Feuchtesensoren ausgebildet sind.

Im Betrieb der Prüfvorrichtung 10d werden während des Bearbeitungsvorgangs des Verbundbauteils 26 der Bearbeitungsstaub abgesaugt und auf der Filtermembran 48 angereichert (Figur 5). Anschließend wird das Filtergehäuse 46 geöffnet und die Filtermembran 48 entnommen und in der Desorptionsund Detektionseinheit 50 platziert (Figur 6 links) . Anschließend wird der Heizstempel 54 gegen die Filtermembran 48 bewegt (Figur 6 rechts), so dass die in den Bearbeitungsstaubpartikeln 42 vorhandenen Kontaminationsstoffe bei der erhöhten Temperatur desorbieren und mittels der Gasdetektoren 62 erfasst werden können.

### Bezugszeichenliste

- 10a-d: Prüfvorrichtung
- 12: Außengehäuse
- 14: Heizstempel
- 15: Heizfläche
- 16: Heizstab
- 18: Thermometer
- 20: Thermostat
- 22: Sensorenarray
- 24: Kontrolleinrichtung
- 26: Verbundbauteil
- 28: Streulichtkammer
- 30: Halogenlampe
- 32: Außenwand
- 34: Strahlungsemitter
- 36: Photodetektor
- 38: IR-Strahlung
- 40: Werkzeug
- 42: Bearbeitungsstaub
- 44: Absaugvorrichtung
- 46: Filtergehäuse
- 48: Filtermembran
- 50: Detektionseinheit
- 51: Analysekammer
- 52: Gehäuse
- 54: Heizstempel
- 56: Heizstab
- 58: Thermometer
- 60: Thermostaten
- 62: Sensorarray

## Patentansprüche

1. Vorrichtung zur Prüfung eines mittels Verklebung zu bearbeitenden Faserverbundbauteils (26) auf das Vorhandensein mindestens eines Stoffes aus einer Auswahl möglicher Kontaminationsstoffe mit:
- einer Oberflächenerwärmungsvorrichtung (14, 30) zur regionalen Erwärmung eines zu verklebenden Teilbereichs des Faserverbundbauteils (26) zwecks Desorption von Kontaminationsstoffen ;
- einem Sensorarray (22, 36) mit mehreren Sensoren zur Erfassung aller Kontaminationsstoffe in der Gasphase; und
- einer Kontrolleinrichtung (24) zur Regelung der Oberflächenerwärmungsvorrichtung (14, 30) sowie zur Ansteuerung und zur Auslesung des Sensorarrays (22, 36) sowie zur Feststellung und Signalisierung ermittelter Kontaminationen, wobei die Oberflächenerwärmungsvorrichtung (14, 30), das Sensorarray (22, 36) und die Kontrolleinrichtung (24) in einer mobilen, integralen Einheit der Vorrichtung umfasst sind, und wobei die Oberflächenerwärmungsvorrichtung (14, 30) als zentraler Heizstempel (14) ausgebildet ist, der von dem Sensorarray (22) umgeben ist, das von einem Außengehäuse (12) umschlossen ist, oder die Oberflächenerwärmungsvorrichtung (14, 30) als Heizstrahlungseinrichtung (30) ausgebildet ist, die zentrisch angeordnet ist und rings um den Strahlungsbereich das Sensorarray (22) angeordnet ist.

2. Vorrichtung nach Anspruch 1, **dadurch gekennzeichnet, dass** der zentrale Heizstempel (14) von einer ringförmigen Streulichtkammer (28) mit reflektierenden Wänden (32) umgeben ist und mindestens ein IR-Lichtemitter (34) vorgesehen ist, der in die Streulichtkammer (28) strahlt und mehrere in der Wandung (32) der Streulichtkammer (28) angeordnete selektive Fotodetektoren (36) angeordnet sind.

3. Vorrichtung nach Anspruch 1, **dadurch gekennzeichnet, dass** ein mit der Kontrolleinrichtung (24) gekoppeltes optisches Thermometer (18) vorgesehen ist zur Messung der Temperatur des bestrahlten Bereiches.

4. Vorrichtung nach Anspruch 1, **dadurch gekennzeichnet, dass** das Sensorarray (22, 62) eine Anzahl von Metalloxid-Gasdetektoren (MOX) umfasst, die jeweils für einzelne Kontaminationsstoffe sensitiv sind.

5. Vorrichtung nach Anspruch 1, **dadurch gekennzeichnet, dass** das Sensorarray (22, 62) mindestens einen Feuchtigkeitssensor umfasst.

6. Vorrichtung nach Anspruch 1, **dadurch gekennzeichnet, dass** das Sensorarray (22, 62) mindestens einen nicht-dispersiven Infrarotsensor (NDIR) umfasst.

7. Vorrichtung nach einem oder mehreren der Ansprüche 4 bis 6, **dadurch gekennzeichnet, dass** die einzelnen Sensoren des Sensorarrays (22, 62) selektiv sind für einen oder mehrere der folgenden Kontaminationsstoffe: Tenside, synthetische Ester, Alkohole, Glykole, Alkohole, Benzine, Kerosine, Butylphosphate, Phenylphosphate, Phosphatester, Mineralöle, Kaliumacetate, Natriumformiate, Phosphate, Silikate, Wasser, Feuchtigkeit, Butanone, Methyl-Ethyl-Keton, Kohlenwasserstoffe, Silikone, Fluorkohlenwasserstoffe, synthetische Öle und Schmierstoffe.

8. Vorrichtung nach einem oder mehreren der vorherigen Ansprüche, **dadurch gekennzeichnet, dass** diese zur Prüfung eines mittels Verklebung zu bearbeitenden Faserverbundbauteils (26), das Bestandteil eines Luftfahrzeugs ist, eingerichtet ist.

## Claims

1. Device for testing a fibre composite component (26), which is to be processed by means of adhesive bonding, for the presence of at least one substance from a selection of possible contaminants, comprising:
- a surface heating device (14, 30) for regionally heating a partial region of the fibre composite component (26) to be adhesively bonded, for the purpose of desorbing contaminants;
- a sensor array (22, 36) comprising a plurality of sensors for detecting all contaminants in the gas phase; and
- a control unit (24) for regulating the surface heating device (14, 30) and also for driving and for reading the sensor array (22, 36) and also for establishing and signalling ascertained contaminants,
wherein the surface heating device (14, 30), the sensor array (22, 36) and the control unit (24) are encompassed in a mobile, integral unit of the device, and wherein the surface heating device (14, 30) is embodied as a central heating plunger (14) surrounded by the sensor array (22), which is enclosed by an outer housing (12) or the surface heating device (14, 30) is embodied as a radiant heating unit (30) arranged centrally and the sensor array (22) is arranged all around the radiation region.

2. Device according to Claim 1, **characterized in that** the central heating plunger (14) is surrounded by a ring-shaped scattered light chamber (28) having reflective walls (32) and at least one IR light emitter (34) is provided which radiates into the scattered light chamber (28) and there are arranged a plurality of selective photodetectors (36) arranged in the wall (32) of the scattered light chamber (28).

3. Device according to Claim 1, **characterized in that** an optical thermometer (18) coupled to the control unit (24) is provided for measuring the temperature of the irradiated region.

4. Device according to Claim 1, **characterized in that** the sensor array (22, 62) comprises a number of metal oxide gas detectors (MOX), which are respectively sensitive to individual contaminants.

5. Device according to Claim 1, **characterized in that** the sensor array (22, 62) comprises at least one moisture sensor.

6. Device according to Claim 1, **characterized in that** the sensor array (22, 62) comprises at least one non-dispersive infrared sensor (NDIR).

7. Device according to one or more of Claims 4 to 6, **characterized in that** the individual sensors of the sensor array (22, 62) are selective for one or more of the following contaminants: surfactants, synthetic esters, alcohols, glycols, alcohols, petrol fuels, kerosene fuels, butyl phosphates, phenyl phosphates, phosphate esters, mineral oils, potassium acetates, sodium formates, phosphates, silicates, water, moisture, butanones, methyl ethyl ketone, hydrocarbons, silicones, fluorocarbons, synthetic oils and lubricants.

8. Device according to one or more of the preceding claims, **characterized in that** it is configured for testing a fibre composite component (26) which is to be processed by means of adhesive bonding and which is part of an aircraft.

## Revendications

1. Dispositif de contrôle d'un élément structural composite à base de fibres (26) à transformer par collage en vue de vérifier la présence d'au moins une substance parmi une sélection de substances contaminantes possibles, comprenant :
- un dispositif d'échauffement de surface (14, 30) destiné à échauffer régionalement une zone partielle à coller de l'élément structural composite à base de fibres (26) en vue de la désorption des substances contaminantes ;
- un réseau de capteurs (22, 36) comprenant plusieurs capteurs destinés à détecter toutes les substances contaminantes dans la phase gazeuse ; et
- un contrôleur (24) destiné à réguler le dispositif d'échauffement de surface (14, 30) ainsi qu'à commander et à effectuer un relevé du réseau de capteurs (22, 36) ainsi qu'à constater et à signaler les contaminations déterminées, le dispositif d'échauffement de surface (14, 30), le réseau de capteurs (22, 36) et le contrôleur (24) étant compris dans une unité mobile intégrée du dispositif, et
le dispositif d'échauffement de surface (14, 30) étant réalisé sous la forme d'un piston chauffant central (14), lequel est entouré par le réseau de capteurs (22), qui est cerné par un boîtier externe (12), ou le dispositif d'échauffement de surface (14, 30) étant réalisé sous la forme d'un appareil de rayonnement thermique (30), qui est disposé de manière centrée et est disposé de manière annulaire autour de la zone de rayonnement du réseau de capteurs (22).

2. Dispositif selon la revendication 1, **caractérisé en ce que** le piston chauffant central (14) est entouré par une chambre à lumière diffusée (28) de forme annulaire ayant des parois (32) réfléchissantes et au moins un émetteur de lumière IR (34) est présent, lequel irradie dans la chambre à lumière diffusée (28) et plusieurs détecteurs photoélectriques (36) sélectifs sont disposés dans la paroi (32) de la chambre à lumière diffusée (28).

3. Dispositif selon la revendication 1, **caractérisé en ce qu'**un thermomètre optique (18) couplé au contrôleur (24) est présent pour mesurer la température de la zone irradiée.

4. Dispositif selon la revendication 1, **caractérisé en ce que** le réseau de capteurs (22, 62) comporte un certain nombre de détecteurs de gaz à oxyde métallique (MOX) qui sont respectivement sensibles à des substances contaminantes individuelles.

5. Dispositif selon la revendication 1, **caractérisé en ce que** le réseau de capteurs (22, 36) comporte au moins un capteur d'humidité.

6. Dispositif selon la revendication 1, **caractérisé en ce que** le réseau de capteurs (22, 36) comporte au moins un capteur d'infrarouge non dispersif (NDIR).

7. Dispositif selon l'une ou plusieurs des revendications 4 à 6, **caractérisé en ce que** les capteurs individuels du réseau de capteurs (22, 36) sont sélectifs pour une ou plusieurs des substances contaminantes suivantes : agents tensioactifs, esters synthétiques, alcools, glycols, alcools, essences, kérosène, phosphate de butyle, phosphate de phényle, esters phosphates, huiles minérales, acétates de potassium, formiates de sodium, phosphates,, silicates, eau, humidité, butanone, éthyle méthyl cétone, hydrocarbures, silicones, hydrocarbures fluorés, huiles synthétiques et lubrifiants.

8. Dispositif selon l'une ou plusieurs des revendications précédentes, **caractérisé en ce que** celui-ci est conçu pour le contrôle d'un élément structural composite à base de fibres (26) à transformer par collage qui est un élément constitutif d'un aéronef.
